(19) **Europäisches Patentamt**

**European Patent Office**

**Office européen des brevets**

(11) Veröffentlichungsnummer: **0 254 182 B1**

(12) **EUROPÄISCHE PATENTSCHRIFT**

(45) Veröffentlichungstag der Patentschrift: **02.01.92**

(21) Anmeldenummer: **87110142.4**

(22) Anmeldetag: **14.07.87**

(51) Int. Cl.⁵: **B29C 31/04**, B29C 31/02, B29C 67/22, //B29K105:04

(54) Auftragsvorrichtung für eine fliessfähige, aufschäumende Reaktionsmasse zur Herstellung von Kunstschaumstoff.

(30) Priorität: **25.07.86 DE 3625236**

(43) Veröffentlichungstag der Anmeldung:
**27.01.88 Patentblatt 88/04**

(45) Bekanntmachung des Hinweises auf die Patenterteilung:
**02.01.92 Patentblatt 92/01**

(84) Benannte Vertragsstaaten:
**BE DE FR GB IT NL**

(56) Entgegenhaltungen:
**DE-A- 2 703 680**
**FR-A- 2 526 130**
**US-A- 3 419 934**

(73) Patentinhaber: **BAYER AG**

**W-5090 Leverkusen 1 Bayerwerk(DE)**

(72) Erfinder: **Redmer, Frank**
**Ewald-Röll-Strasse 15**
**W-5090 Leverkusen 3(DE)**
Erfinder: **Bock, Rolf, Dipl.-Ing.**
**Zedernweg 41**
**W-5090 Leverkusen 3(DE)**
Erfinder: **Berger, Michael, Dipl.-Ing.**
**Carl-Orff-Strasse 8**
**W-4010 Hilden(DE)**
Erfinder: **Zietan, Joachim, Dipl.-Ing.**
**Bonifatiusstrasse 9**
**W-5090 Leverkusen(DE)**

## Beschreibung

Die Erfindung betrifft eine Auftragsvorrichtung für eine fließfähige, aufschäumende Reaktionsmasse zur Herstellung von Kunstschaumstoff mit einem quer zu einer in Aufschäumrichtung bewegbaren Unterlage angeordneten und sich über die ganze Breite erstreckenden, seitlich geschlossenen Gießbalken, welcher aus zwei konzentrisch angeordneten Rohren besteht, wobei beide Rohre mit mindestens einer Reihe von Öffnungen versehen sind und in den Hohlraum des inneren Rohres eine Gemischzuführleitung mündet.

Aus der DE-AS 2 703 680 ist eine derartige Auftragsvorrichtung bekannt, wobei zwischen den beiden Rohren des Gießbalkens ein konzentrischer Hohlraum vorgesehen ist, und das innere Rohr an seiner höchsten Stelle Überlauföffnungen aufweist. Außerdem sind noch Einbauten vorgesehen, welche bewirken sollen, daß das Altersspektrum des Reaktionsgemisches über die Länge des Gießbalkens möglichst schmal ist. D. h., über die Breite der Unterlage soll nach Möglichkeit gleich altes Reaktionsgemisch aufgetragen werden. Durch die großen Innenräume des Gießbalkens bedarf es zum Reinigen nach Beendigung des Gemischauftrages einer großen Menge von Spülmittel. Nicht nur seine Beschaffung, sondern auch seine Entsorgung ist aufwendig und kostspielig.

Es besteht die Aufgabe, die eingangs genannte Auftragsvorrichtung so zu gestalten, daß einerseits über die gesamte Länge des Gießbalkens der gleichzeitig beginnende Austritt des Reaktionsgemisches aus den Öffnungen auf die Unterlage gewährleistet ist, aber andererseits möglichst wenig Innenraum vorhanden ist, um bei der Reinigung mit geringeren Mengen an Spülmittel auszukommen.

Diese Aufgabe wird dadurch gelöst, daß das innere Rohr, gegebenenfalls unter Zwischenlage einer Dichtung, in das äußere Rohr bezüglich des Durchmessers eingepaßt ist, daß eines der beiden Rohre gegenüber dem anderen bewegbar ist, und daß die Öffnungen der beiden Rohre einander zugeordnet sind und sich in Gießstellung decken.

Dadurch wird erreicht, daß zwischen den beiden Rohren kein zusätzlicher Hohlraum mehr vorhanden ist, und daß die innere Wandung des äußeren Rohres praktisch nur in jenem Bereich von Reaktionsgemisch benetzt wird, welcher im Hubweg der Öffnungen des bewegten Rohres liegt. Daß das Gemisch aus allen Öffnungen des äußeren Rohres gleichzeitig austritt, wird dadurch erzielt, daß die Öffnungen des inneren Rohres zunächst durch die Wandung des ruhenden Rohres abgedichtet sind. Erst in dem Augenblick, wo das innere Rohr mit Reaktionsgemisch gefüllt ist, wird eines der beiden Rohre so zum anderen bewegt, daß sich die Öffnungen beider Rohre decken, so daß das Reaktionsgemisch durch die sich deckenden Öffnungen hindurch austreten kann. Es ist sogar möglich, die Austrittslänge an Reaktionsgemisch zu variieren, indem man die Öffnungen der beiden Rohre sich nur teilweise überdecken läßt.

Da beim Füllen des inneren Rohres mit Reaktionsgemisch in dem Hohlraum Luft verbleibt, wird diese darin im oberen Bereich komprimiert.

Um dies zu vermeiden, sieht die Erfindung vorzugsweise vor, daß an den Enden des inneren Rohres Entlüftungsöffnungen vorgesehen sind, welche sich mindestens dann mit entsprechenden Entlüftungsöffnungen des äußeren Rohres decken, wenn sich die anderen Öffnungen nicht decken.

Auf diese Weise kann das Reaktionsgemisch die im Hohlraum vorhandene Luft durch die Entlüftungsöffnungen hinausdrücken. Sind die Entlüftungsöffnungen im unteren Bereich angeordnet und decken sie sich jederzeit, so lassen sich auch diese Entlüftungsöffnungen für den Gemischauftrag verwenden.

Die Bewegbarkeit der beiden Rohre zueinander läßt sich dadurch bewerkstelligen, daß eines der beiden Rohre in Achsrichtung verschiebbar ist, oder daß eines der beiden Rohre um die Achse verdrehbar ist.

Selbstverständlich könnten auch beide Rohre die entsprechende Bewegung zueinander ausführen, was aber wegen des erhöhten Aufwandes unsinnig wäre.

Nach einer weiteren, besonderen Ausführungsform ist es zweckmäßig, dem Innenraum des inneren Rohres einen Füllstandsanzeiger zuzuordnen, welcher über einen Impulsgeber mit einem dem bewegbaren Rohr zugeordneten Antrieb verbunden ist.

Dadurch wird erreicht, daß bei voller Füllung der beispielsweise auf Druck ansprechende Füllstandsanzeiger über dem Impulsgeber den Antrieb einschaltet, so daß die Öffnungen der beiden Rohre daraufhin zur Deckung gebracht werden.

In der Zeichnung ist die neue Auftragsvorrichtung in einem Ausführungsbeispiel rein schematisch dargestellt und nachstehend näher erläutert. Es zeigen:

Fig. 1 die Auftragsvorrichtung im Längsschnitt in Gießstellung,

Fig. 2 einen Schnitt gemäß Linie A-B in Fig. 1,

Fig. 3 ebenfalls einen Schnitt gemäß Linie A-B, jedoch mit dem inneren Rohr des Gießbalkens in Füllstellung und

Fig. 4 einen Schnitt gemäß Linie C-D in Fig. 1.

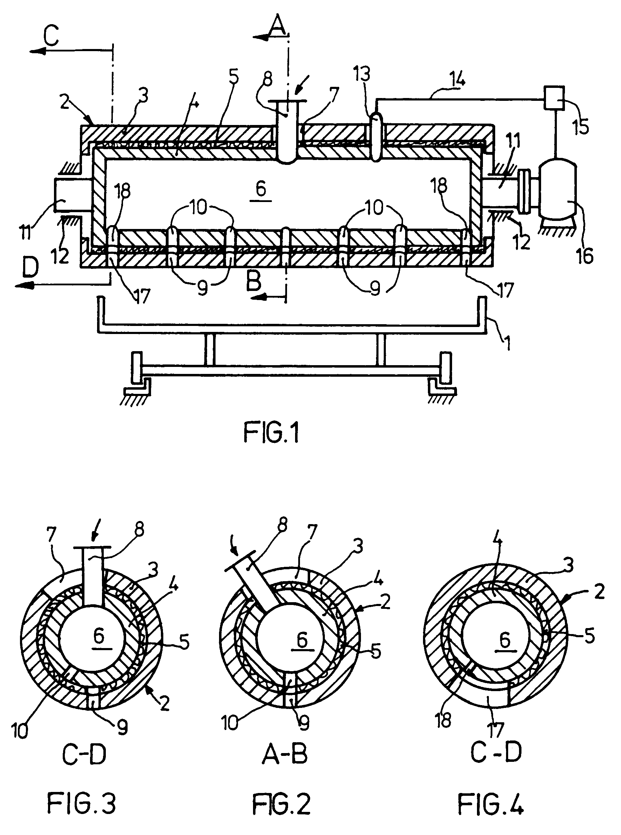

In den Fig. 1 bis 4 besteht die Auftragsvorrichtung im wesentlichen aus einem quer über einer bewegbaren Unterlage 1 angeordneten Gießbalken 2. Dieser Gießbalken 2 ist in nicht dargestellter Weise fix gelagert. Er besteht aus einem äußeren Rohr 3 und einem inneren Rohr 4. Dazwischen befindet sich eine an der Innenwandung des äußeren Rohres 3 haftende Dichtungsschicht 5 aus Polytetrafluorethylen. In den Hohlraum 6 des inneren Rohres 4 mündet von oben durch eine Aussparung 7 des äußeren Rohres 3 eine Zuführungsleitung 8, welche von einem nicht dargestellten Mischkopf abführt.

Jedes der Rohre 3, 4 weist eine Reihe von Öffnungen 9, 10 auf, wobei die Öffnungen 9 des äußeren Rohres 3 auch durch die Dichtungsschicht 5 hindurchgehen, und welche derart angeordnet sind, daß die Öffnungen 9 des äußeren Rohres 3 und die Öffnungen 10 des inneren Rohres 4 sich decken, wenn das verdrehbare innere Rohr 4 in entsprechende Stellung gebracht wird. Das innere Rohr 4 ist mittels Achszapfen 11 in Lagerschalen 12 gelagert. Dem Hohlraum 6 des inneren Rohres 4 ist ein Füllstandsanzeiger 13 zugeordnet, welcher mittels einer Impulsleitung 14 über einen Impulsgeber 15 mit dem Antrieb 16 des inneren Rohres 4 verbunden ist. Die äußersten Öffnungen 17, 18 der Rohre 3, 4 dienen als Entlüftungsöffnungen. Dabei sind die Entlüftungsöffnungen 17 des äußeren Rohres 3 als Schlitze ausgebildet, so daß der Hohlraum 6 in jeder Stellung des inneren Rohres 4 zur Atmosphäre hin offen ist und deshalb in Gießstellung des inneren Rohres 4 auch zum Auftragen des Reaktionsgemisches dient.

Ein weiteres Ausführungsbeispiel mit einem axial verschiebbaren Rohr erübrigt sich, weil für den Fachmann eine entsprechende Abwandlung des dargestellten und beschriebenen Ausführungsbeispieles mit verdrehbarem inneren Rohr aufgrund seines handwerklichen Rüstzeuges ohne weiteres möglich ist.

**Patentansprüche**

1.   Auftragsvorrichtung für eine fließfähige, aufschäumende Reaktionsmasse zur Herstellung von Kunstschaumstoff, mit einem quer zu einer in Aufschäumrichtung bewegbaren Unterlage (1) angeordneten und sich über die ganze Breite erstreckenden, seitlich geschlossenen Gießbalken (2), welcher aus zwei konzentrisch angeordneten Rohren (3, 4) besteht, wobei beide Rohre (3, 4) mit mindestens einer Reihe von Öffnungen (9, 10) versehen sind, und wobei in dem Hohlraum (6) des inneren Rohres (4) eine Gemischzuführleitung (8) mündet, dadurch gekennzeichnet, daß das innere Rohr (4), gegebenenfalls unter Zwischenlage einer Dichtung (5), in das äußere Rohr (3) bezüglich des Durchmessers eingepaßt ist, daß eines der beiden Rohre (3, 4) gegenüber dem anderen bewegbar ist, und daß die Öffnungen (9, 10) der beiden Rohre (3, 4) ineinander angeordnet sind und sich in einer Stellung decken.

2.   Auftragsvorrichtung nach Anspruch 1, dadurch gekennzeichnet, daß an den Enden des inneren Rohres (4) Entlüftungsöffnungen (18) vorgesehen sind, welche sich mindestens dann mit entsprechenden Entlüftungsöffnungen (17) des äußeren Rohres (3) decken, wenn sich die anderen Öffnungen (9, 10) nicht decken.

3.   Auftragsvorrichtung nach einem der Ansprüche 1 oder 2, dadurch gekennzeichnet, daß eines der beiden Rohre (3, 4) in Achsrichtung verschiebbar ist.

4.   Auftragsvorrichtung nach Anspruch 1 oder 2, dadurch gekennzeichnet, daß eines der beiden Rohre (3, 4) um die Achse verdrehbar ist.

5.   Auftragsvorrichtung nach einem der Ansprüche 1 bis 4, dadurch gekennzeichnet, daß dem Hohlraum (6) des inneren Rohres (4) ein Füllstandsanzeiger (13) zugeordnet ist, welcher mittels einer Impulsleitung (14) über einen Impulsgeber (15) mit einem dem bewegbaren Rohr (4) zugeordneten Antrieb (16) verbunden ist.

**Claims**

1.   A dispensing device for a flowable, foamable reactive compound for the production of synthetic foam material, comprising a laterally closed casting beam (2) which is arranged transversely to a base (1), moveable in the foaming direction, and which extends along the entire width of the base and which consists of two concentrically arranged pipes (3, 4), where the two pipes (3, 4) are provided with at least one row of openings (9, 10) and where a mixture supply line (8) opens into the cavity (6) of the inner pipe (4), characterised in that the inner pipe (4) is diametrally fitted into the outer pipe (3), optionally with a seal (5) arranged therebetween, that one of the two pipes (3, 4) is moveable in relation to the other, and that the openings (9, 10) of the two pipes (3, 4) are assigned to one another and coincide in one position.

2.   A dispensing device as claimed in Claim 1, characterised in that ventilation openings (18) are provided at the ends of the inner pipe (4), which ventilation openings (18) coincide with corresponding ventilation openings (17) of the outer pipe (3) at least when the other openings (9, 10) do not coincide.

3. A dispensing device as claimed in one of Claims 1 or 2, characterised in that one of the two pipes (3, 4) is axially displaceable.

4. A dispensing device as claimed in Claim 1 or 2, characterised in that one of the two pipes (3, 4) is axially rotatable.

5. A dispensing device as claimed in one of Claims 1 to 4, characterised in that the cavity (6) of the inner pipe (4) is assigned a level indicator (13) which is connected by means of a pulse line (14), via a pulse generator (15), to a drive (16) assigned to the moveable pipe (4).

## Revendications

1. Dispositif d'application pour une masse réactionnelle fluide et pouvant se transformer en mousse pour la production de mousse de plastique, avec barre de coulée (2) fermée latéralement disposée transversalement par rapport à un support (1) pouvant se déplacer dans la direction d'application de la mousse et s'étendant sur toute la largeur, cette barre étant constituée de deux tubes (3, 4) disposés concentriquement qui sont pourvus d'au moins une rangée d'orifices (9, 10) tandis qu'une conduite d'adduction de mélange (8) débouche dans la cavité (6) du tube intérieur (4), caractérisé en ce que le tube intérieur (4) est ajusté dans le tube extérieur (3) par rapport à son diamètre, éventuellement avec interposition d'un joint (5), en ce que l'un des deux tubes (3, 4) peut se déplacer par rapport à l'autre et que les orifices (9, 10) des deux tubes (3, 4) correspondent les uns aux autres et coïncident dans une position.

2. Dispositif d'application selon la revendication 1, caractérisé en ce que des orifices d'évacuation d'air (18) sont prévus aux extrémités du tube intérieur (4) et coïncident avec des orifices d'évacuation d'air (17) correspondants du tube extérieur (3) au moins lorsque les autres orifices (10, 9) ne sont pas en coïncidence.

3. Dispositif d'application selon l'une des revendications 1 ou 2, caractérisé en ce que l'un des deux tubes (3, 4) peut coulisser en direction axiale.

4. Dispositif d'application selon la revendication 1 ou 2, caractérisé en ce que l'un des deux tubes (3, 4) peut tourner autour de son axe.

5. Dispositif d'application selon l'une des revendications 1 à 4, caractérisé en ce que la cavité (6) du tube intérieur (4) est équipée d'un indicateur de remplissage (13) qui est connecté par un conducteur d'impulsions (14) et par l'intermédiaire d'un générateur d'impulsions (15) avec une commande (16) agissant sur le tube mobile (4).

FIG.1

C-D

FIG.3

A-B

FIG.2

C-D

FIG.4